# EUROPEAN PATENT APPLICATION

(11) **EP 4 810 784 A2**
(43) Date of publication of application: **23.09.2026**
(21) Application number: 26196243.5
(22) Date of filing: 29.07.2025
(51) Int. Cl.: F02C 7/36

(54) **SYSTEM TO SELECTIVELY TRANSFER POWER OF A TURBINE ENGINE**

(30) Priority: 06.08.2024 US 202418795485
(62) Document number(s) of the earlier application(s) in accordance with Art. 76 EPC: 25192335.5 / 4 692 526
(71) Applicant: The Boeing Company, Arlington, VA 22202 (US)
(72) Inventor: Foutch, David W., Arlington, 22202 (US); Conner, Alex Christopher, Arlington, 22202 (US); Dirusso, Joseph M., Arlington, 22202 (US); McWhirter, Jacob Bevan, Arlington, 22202 (US); Bouwer, Scott Hendrik, Arlington, 22202 (US)
(74) Representative: Witte, Weller & Partner Patentanwälte mbB

(57) **Abstract**

A system configured to be operatively connected to a turbine engine of an aircraft and to an accessory of an aircraft. The system is configured to selectively transfer power between a first pressure spool of the turbine engine and a second pressure spool of the turbine engine and to power the accessory to deliver air to an aircraft system of the aircraft. (Fig. 3)

## Description

### TECHNOLOGICAL FIELD

The present disclosure relates generally to the field of turbine engines and, more specifically, to a system that selectively provides for selectively transferring mechanical power of a turbine engine.

### BACKGROUND

Various aircraft are driven by turbine engines. These engines include a fan that provides a significant fraction of the overall propulsion system thrust. An engine core drives the fan and produces additional thrust by directing exhaust products in an aft direction. In addition to providing thrust to propel the aircraft, the turbine engine provides power to aircraft systems in the form of shaft power and pneumatic bleed air.

When the aircraft is on the ground with the engine operating at idle, the turbine engine produces shaft power for aircraft operation. The shaft power is typically taken from the core shaft of the engine (also called N1 or high spool). Shaft power extraction from the high spool during ground operation results in increased ground idle fuel flow, thrust, and causes a decrease in high pressure compressor stability margin.

The turbine engine can also be configured to provide pneumatic bleed air to an aircraft system. The aircraft system includes one or more components such as but not limited to an environmental control system to pressurize a passenger cabin of the aircraft and thermal anti-icing systems to provide heated air for anti-icing applications. Air supply to the aircraft system is typically provided by bleed air extracted from the high pressure compressor of the turbine engine.

Alternatively, aircraft pneumatic bleed air can be provided by an auxiliary compressor that uses shaft power and air from a lower stage of the engine compressor. The auxiliary compressor is operated to provide the air to the aircraft system at the needed pressure levels.

There is a need for a system to provide for efficient operation of the turbine engine.

### SUMMARY

According to the present disclosure, a system configured to be operatively connected to a turbine engine of an aircraft, and method of transferring mechanical power in a turbine engine of an aircraft, as defined in the independent claims, are provided. Further embodiments are defined in the dependent claims.

One aspect is directed to a system configured to be operatively connected to a turbine engine of an aircraft and to an accessory of an aircraft. The system is configured to selectively transfer power between a first pressure spool of the turbine engine and a second pressure spool of the turbine engine and to power the accessory.

In another aspect, the system comprises a transmission with a speed changing transmission and a clutch.

In another aspect, the transmission is configured to selectively operate in one of a first configuration, a second configuration, and a third configuration. The first configuration transfers power from the turbine engine to the accessory. The second configuration transfers power from the first pressure spool to the second pressure spool. The third configuration prevents the transfer of power from the turbine engine to the accessory and prevents transfer of power from the first pressure spool to the second pressure spool.

In another aspect, wherein the speed changing element is powered by the second pressure spool in the first configuration.

In another aspect, the system further comprises a transmission, a first drive mechanism that connects the first pressure spool to the transmission, and a second drive mechanism that connects the second pressure spool to the transmission.

In another aspect, wherein the accessory is a compressor and the transmission is configured to operate at different speeds to cause the compressor to deliver air at a desired pressure to the aircraft system of the aircraft.

In another aspect, a controller with processing circuitry is configured to drive the accessory and to transfer the power produced from the first pressure spool to the second pressure spool.

In another aspect, the controller is integrated within a body of the transmission.

In another aspect, the controller is further configured to operate one or more components of the aircraft system of the aircraft.

In another aspect, the transmission is configured to transfer power from the first pressure spool to the second pressure spool and to transfer the power from the second pressure spool to the first pressure spool.

In another aspect, the speed changing element is powered by the first pressure spool.

In another example, the accessory is a compressor, the first pressure spool is a low pressure spool, and the second pressure spool is a high pressure spool, and wherein the system is configured to selectively transfer power between the low pressure spool and the second pressure spool to deliver air to an aircraft system of the aircraft.

One aspect is direct to a system configured to be operatively connected to a turbine engine of an aircraft. The system comprises an accessory, a transmission, a first drive mechanism that connects the transmission to a second pressure spool of the turbine engine, and a second drive mechanism that connects the transmission to a first pressure spool of the turbine engine. The transmission is configured to transfer power of the turbine engine through the first drive mechanism and the second drive mechanism. The transmission is configured to drive the accessory.

In another aspect, the transmission is configured to transfer the power from the first pressure spool to the second pressure spool through the first drive mechanism and the second drive mechanism.

In another aspect, the transmission is configured to transfer the power from the second pressure spool to the first pressure spool through the first drive mechanism and the second drive mechanism.

In another aspect, the transmission comprises a speed changing element operatively connected to and powered by the second pressure spool and a clutch.

In another aspect, the speed changing element is a continuously variable transmission.

In another aspect, the transmission comprises a speed changing element operatively connected to and powered by the first pressure spool.

In another aspect, the accessory is a compressor and the system comprises a bleed air system comprising one or more ports and first passageways through which air is delivered from the turbine engine to the aircraft.

In another aspect, the bleed air system further comprises a second passageway that delivers air from the turbine engine to the compressor with the second passageway being separate from the first passageways.

In another aspect, a controller is configured to selectively operate the transmission in a first mode to transfer the power of the turbine engine through the first drive mechanism and the second drive mechanism and in a second mode to drive the accessory.

In another aspect, the controller is further configured to control operation of a bleed air system that delivers air from the turbine engine to the aircraft.

One aspect is directed to a method of transferring mechanical power in a turbine engine of an aircraft. The method comprises: positioning a transmission in a first configuration and transferring power from the turbine engine to an accessory; and positioning the transmission in a second configuration and transferring power from a first pressure spool of the turbine engine to a second pressure spool of the turbine engine.

In another aspect, the method further comprises the accessory being a compressor and transferring power from the turbine engine to the compressor and delivering air from the turbine engine to an aircraft system.

In another aspect, the first pressure spool is a low pressure spool and the second pressure spool is a high pressure spool and positioning the transmission in the second configuration comprises transferring power from the low pressure spool of the turbine engine to the high pressure spool of the turbine engine.

In another aspect, the method further comprises providing air to the aircraft system through a bleed air system when the transmission is in the first configuration.

In another aspect, the method further comprises preventing power from being transferred from the turbine engine to the compressor in the second configuration.

In another aspect, the second pressure spool is a high pressure spool and the method further comprises in the first configuration transferring the power from the high pressure spool of the turbine engine to the compressor.

In another aspect, the method further comprising positioning the transmission in a third configuration and transferring power from the high pressure spool to the low pressure spool.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an aircraft with turbine engines.
Figure 2 is a schematic diagram of a system that selectively transfers mechanical power of a turbine engine.
Figure 3 is a schematic diagram of a system to deliver air to an aircraft system and of transfer power within a turbine engine.
Figure 4 is a schematic diagram of a system that selectively transfers mechanical power of a turbine engine.
Figure 5 is a schematic diagram of a controller.
Figure 6 is a schematic diagram of controllers configured to operate components to provide air to an aircraft system and transfer power within a turbine engine.
Figure 7 is a flowchart diagram of a method of operating a transmission to transfer mechanical power of a turbine engine.

### DETAILED DESCRIPTION

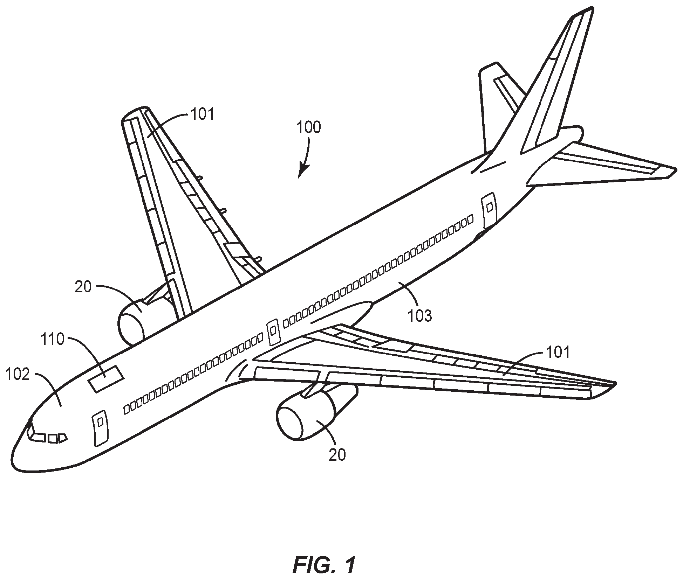

Figure 1 illustrates an example of an aircraft 100. The aircraft 100 generally includes a fuselage 103 and wings 101. One or more turbine engines 20 are mounted to the wings 101 to propel the aircraft 100. A flight deck 102 is positioned at the front of the fuselage 103 and includes controls that provide for operating the aircraft 100. A rearward section of the fuselage 103 includes a cabin area configured to accommodate passengers or cargo.

The aircraft 100 includes an aircraft system 110 that includes one or more systems for operating various components including but not limited to an environmental control system, a wing anti-icing system, an engine anti-icing system and various others that utilize heated and/or pressurized air. One or more of the turbine engines 20 supply bleed air to the aircraft system 110 for use with one or more of the components such as in the environmental control system. The bleed air can be supplied during various operating conditions such as but not limited to ground operation (taxi), take-off or climb, cruise, hold, and descent.

The engines 20 provide thrust to propel the aircraft, and power the aircraft hydraulic and pneumatic systems. The engines 20 also provide shaft power for the aircraft electrical system, including the aircraft system 110, aircraft computers, motor-driven hydraulic pumps, and/or other motors and electrical devices and accessories.

As aircraft accessory power demands have increased, there has been an increased need to run the turbine engine 20 at higher idle speeds. More specifically, increasing engine idle speed enables increased power demands to be met without sacrificing compressor stall margins. However, the increased idle speed may also generate thrust levels for the turbine engine 20 that is higher than desired for both flight idle descent operations and/or during ground idle operations. Over time, continued operation with increased thrust levels during such idle operations may increase maintenance costs of aircraft brakes and the increased fuel flow directly increases aircraft operating expenses.

This application is directed to systems 15 for transferring power of a turbine engine 20 for efficient operation of the aircraft 100. In some examples, an engine 20 is configured to provide power to an accessory. In some examples, a first one of the engines 20 propels the aircraft 100 and is operated to generate power and provide bleed air. In some examples, two or more of the turbine engines 20 operate to generate power and provide bleed air and therefore include the same components and operate in the same manner. The disclosure below includes operation of a single turbine engine 20. It is understood that two or more of the engines 20 can operate in substantially the same manner to provide power transfer to meet the demands of the aircraft 100.

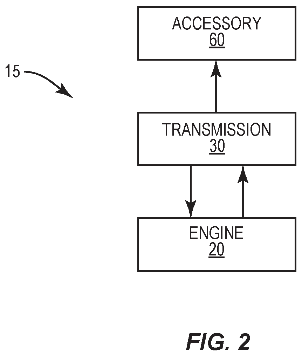

As schematically illustrated in Figure 2, a system 15 to transfer power includes a transmission 30 configured to selectively transmit power of the turbine engine 20. The transmission 30 is configured to transmit power to an accessory 60. The transmission 30 is also configured to transfer power within the turbine engine 20.

The accessory 60 can include a variety of different devices, such as various airframe accessories and various engine accessories. One example includes a compressor that is driven to supply air to the aircraft 100. Other examples of accessories 60 include but are not limited to electrical generators, hydraulic pumps, fuel pumps, and oil pumps.

Some of the examples disclosed below include the accessory 60 being a compressor. However, a compressor is just one example of the various devices that can be powered through the present configuration disclosed in this application.

The system 15 solves two problems associated with a conventional aircraft. A first problem that is solved is that bleed air supply is often inefficient due to the turbine engine providing air at a higher pressure than is required by the aircraft systems. A second problem that is solved is that engine operability results in higher than desired idle levels, particularly for ground idle conditions.

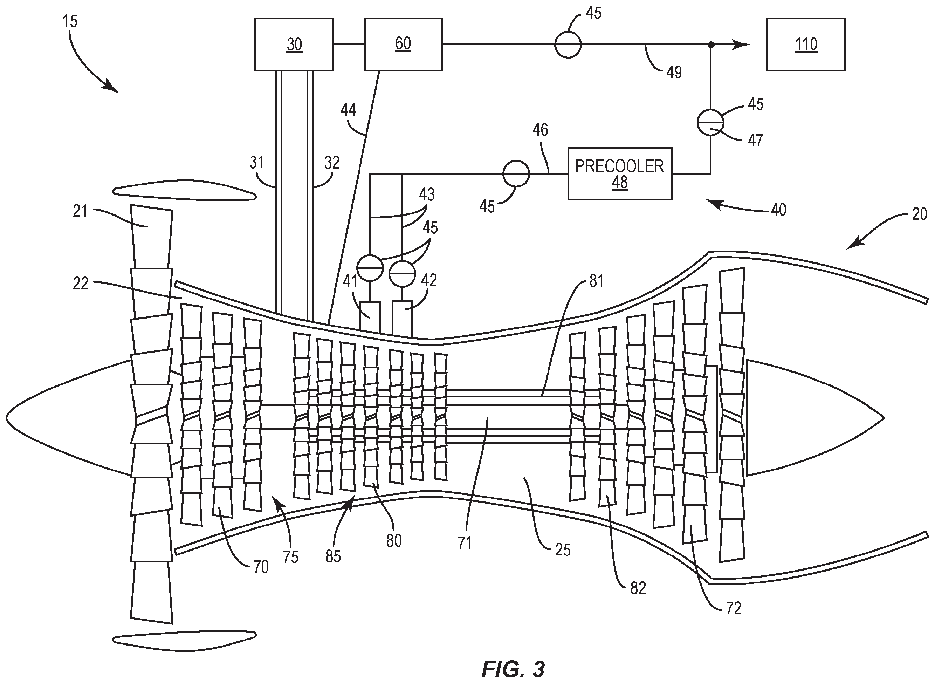

Figure 3 illustrates a schematic diagram of the turbine engine 20 and the architecture to transfer power and supply air to the aircraft system 110. The turbine engine 20 includes a fan 21 that draws air into a fan duct or compressor intake section and into a compressor 22. The compressor 22 includes one or more compressor sections. In some examples as illustrated in Figure 3, the compressor 22 is a dual-axial compressor 22 that includes a low pressure compressor 70 and a high pressure compressor 80. In some examples, the low pressure compressor 70 and the high pressure compressor 80 include various compressor stages that progressively increase the pressure of the air as the air flows from an input section at the fan 21 to a combustion chamber 25.

The low pressure compressor 70 is operatively coupled to a low pressure shaft 71 and the high pressure compressor 80 is operatively coupled to a high pressure shaft 81. The low pressure shaft 71 is further coupled to a low-pressure turbine 72 and the high pressure shaft 81 is coupled to a high-pressure turbine 82. In this example, the compressor 22 is a dual-axial compressor that includes the two compressors 70, 80. However, in other examples, the compressor 22 may include more compressor sections, each having, for example, a turbine and respective shaft.

After exiting the high pressure compressor 80, the highly pressurized air is provided to the combustion chamber 25 where fuel is injected and mixed with the highly pressure air and ignited. The high energy airflow exiting the combustion chamber 25 turns blades of the turbines 72, 82 which are coupled to respective ones of the shafts 71, 81. Rotation of the shafts 71, 81 turns blades of the compressors 70, 80. The heated air is exhausted via a nozzle where it mixes with cool air, provided by the fan 21 that bypasses the engine core to produce forward thrust.

The low pressure components including the low pressure compressor 70, low pressure shaft 71, and low pressure turbine 72 form a low pressure spool 75. The high pressure components including the high pressure compressor 80, high pressure shaft 81, and high pressure turbine 82 form a high pressure spool 85. In some examples as illustrated in Figure 3, the shafts 71, 81 are co-linearly aligned with the first shaft 71 positioned within an interior of the second shaft 81.

A bleed air system 40 supplies engine bleed air for use by the aircraft system 110. The bleed air system 40 includes one or more ports that pull air from the turbine engine 20. In some examples as illustrated in Figure 3, the bleed air system 40 includes a first bleed port 41 and a second bleed port 42. The second bleed port 42 is disposed downstream of the first bleed port 41 and as a result the pressure of the bleed air supplied by the second bleed port 42 is higher than the pressure of the bleed air supplied by the first bleed port 41. Passageways 43 lead from the ports 41, 42 and can include one or more valves 45 to control the flow of air. Valves 45 include various configurations including but not limited to one-way valves, check valves, pressure-regulating valves, and shut-off valves. The passageways 43 lead into passageway 46. In some examples, the temperature of the bleed air supplied by the first and second ports 41, 42 is elevated. The bleed air flows through a precooler 48 to reduce the temperature. Air is output into a passageway 47 and directed to the aircraft system 110.

A separate passageway 44 leads from the engine 20 to the compressor 60. In some examples, the compressor 60 is a shaft-driven compressor (SDC). The compressor has a high horsepower capacity (e.g., 250 HP, 400 HP) and operates at a specific rotational speeds to stay on its operating map. The compressor compresses the bleed air received through passageway 44 and supplies the compressed air through passageway 49 to the aircraft system 110. In some examples, the compressor receives the bleed air through the passageway 44, boosts the bleed air to a higher pressure, and outputs the air through the passageway 49 to meet the demands of the aircraft system 110. One or more valves 45 can be positioned along the passageway to control the flow of the bleed air.

The transmission 30 transfers power from the turbine engine 20 to operate the accessory 60. The transmission 30 modulates or controls a gear ratio to drive the accessory 60 at a desired rotational speed.

A high pressure drive mechanism 31 and a low pressure drive mechanism 32 provide for transferring power from the turbine engine high spool 85 to the transmission 30. The drive mechanisms 31, 32 can include various configurations, such as but not limited to shafts, gear trains, and pulleys. In some examples, a gear box (not illustrated) is connected to the drive mechanisms 31, 32 and transmission 30. The gear box includes a drive train with multiple gears to set a speed of the components. The transmission 30, the high pressure drive mechanism 31 and the low pressure drive mechanism 32 mechanically link the lower pressure spool 75 to the high pressure spool 85. The drive mechanisms 31, 32 can be coupled to the spools 75, 85 in various manners. In some examples, the coupling is through a gear train (e.g., comprising bevel gears) that extends between the ends of the drive mechanism 31, 32 and the respective spool 75, 85.

In addition to powering the accessory 60, the transmission 30 is also configured to transfer mechanical power in the turbine engine 20. Mechanical power from excess available power on the low pressure spool 75 can be directed back into the high pressure spool 85 allowing required speed of the high pressure spool 85 to be maintained, but with reduced fuel flow. Further, extracting power from the low pressure spool 75 reduces the rotational speed of the low pressure spool 75 which in turn reduces the rotational speed of the fan 21. Thus, unwanted fan thrust is reduced and the turbine engine 20 can utilize the excess power to operate additional accessories of the aircraft system 110 without increasing fuel flow. As a result, beneficially, at idle both thrust of the turbine engine 20 and fuel flow are reduced.

The transfer of power from the low pressure spool 75 to the high pressure spool 85 can occur at times when the turbine engine 20 is producing excess thrust that can be harvested from the low pressure spool 75 to power the high pressure spool 85.

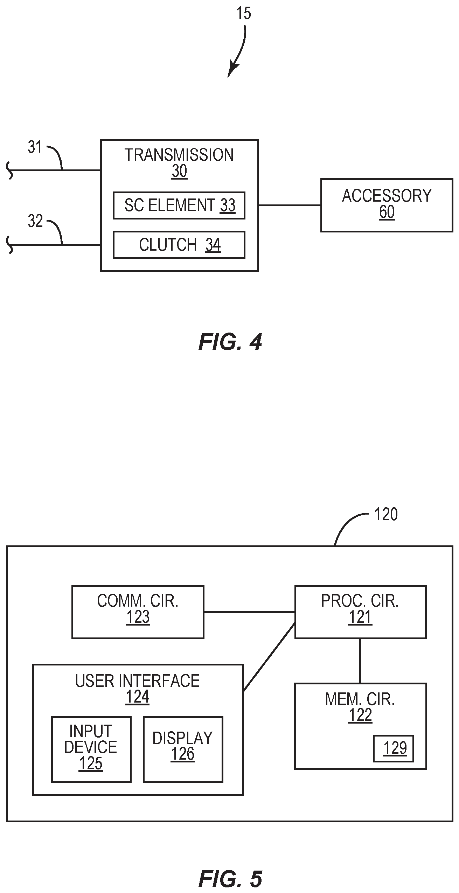

Figure 4 illustrates the transmission 30 that is operatively connected to the drive mechanisms 31, 32 and the accessory 60. The transmission 30 includes a speed changing element 33 that provides for driving the accessory 60 at the different required speeds. The transmission 30 also includes a power transfer clutch 34 configured to transfer power from the first pressure spool 75 to the second pressure spool 85. In some examples, the transmission 30 also includes a gearbox (not illustrated) that is operatively connected to the drive mechanisms 31, 32. The gearbox provides for operation of the drive mechanisms 31, 32 at the various speeds. The transmission 30 can include a variety of different configurations, including but not limited to a continuously variable transmission, and a speed changing element with a torque converter. In some examples, the transmission includes a constant speed transmission.

The transmission 30 operates in one of three configurations. A first configuration engages the speed changing element 33 and transfer power to the accessory 60. A second configuration engages the power transfer clutch 34 and transfers power between the spools 75, 85. A third configuration disengages both the speed changing element 33 and clutch 34 and provides for neither powering the accessory 60 nor providing power transfer between the spools 75, 85.

In some examples, the first pressure spool 75 is a low pressure spool and the second pressure spool 85 is a high pressure spool. In other examples, the spools 75, 85 have different configurations.

A controller 120 controls the operation of the transmission 30. In some examples, the controller 120 is an independent element that functions to just control the transmission 30. The controller 120 can be located at the transmission 30 or can be spaced from the transmission 30 in another area of the aircraft 100. In one example, the controller 120 controls the operation of one or more of the aircraft systems 110 in addition to the transmission 30. In other examples, the controller 120 is included within a larger system that performs additional functionality (e.g., aircraft system controller). In some examples, the controller 120 communicates with an engine controller. In some examples, the controller 120 is part of the engine controller.

The controller 120 operates based on a number of factors including one or any combination of a ground speed of the aircraft 100, weight on wheels of the aircraft 100 (e.g., indicating that the aircraft 100 has landed), engine power level commanded as an input from the controller 120, or during different stages of operation of the aircraft 100. Example stages of operation of the aircraft 100 that can trigger operation of the transmission 30 include ground idle operation of the aircraft 100, when the aircraft 100 is taxiing, when the aircraft 100 enters takeoff mode, during descent of the aircraft 100, or during flight of the aircraft 100 to assist with restart of another turbine engine 20. In some examples, the controller 120 receives signals from one or more other systems on the aircraft 100 (e.g., flight controller) to determine the factors.

Figure 5 illustrates a controller 120 that operates the transmission 30. The controller 120 is a computing device that includes processing circuitry 121 that controls the operation of the transmission 30 according to program instructions 129 stored in memory circuitry 122. The processing circuitry 121 includes one or more circuits, microcontrollers, microprocessors, hardware, or a combination thereof. Memory circuitry 122 includes a non-transitory computer readable storage medium storing the program instructions 129 that configures the processing circuitry 121 to implement one or more of the techniques discussed herein. Memory circuitry 122 can include various memory devices such as, for example, read-only memory, and flash memory. Memory circuitry 122 can be a separate component as illustrated in Figure 5 or can be incorporated with the processing circuitry 121.

Communication circuitry 123 provides for communications with one or more of the components including but not limited to components of the transmission 30, accessory 60, turbine engine 20, bleed air system 40, aircraft system 110, and flight controller. The communication circuitry 123 is configured for communication via one or more wired and/or wireless communication links. In one specific example, a wired communication link includes a fiber optic cable. In some examples, the communication circuitry 123 is configured for communication with one or more remote nodes that are located away from the aircraft 100.

A user interface 124 provides for a person such as pilot or flight crew member to monitor and/or control one or more aspects of the transmission 30. In some examples, the user interface 124 is positioned on the flight deck 102 for use during flight. The user interface 124 includes one or more input devices 125 such as but not limited to a keypad, touchpad, roller ball, and joystick that provide for entering commands to the processing circuitry 121. The user interface 124 can also include one or more displays 126 for displaying information.

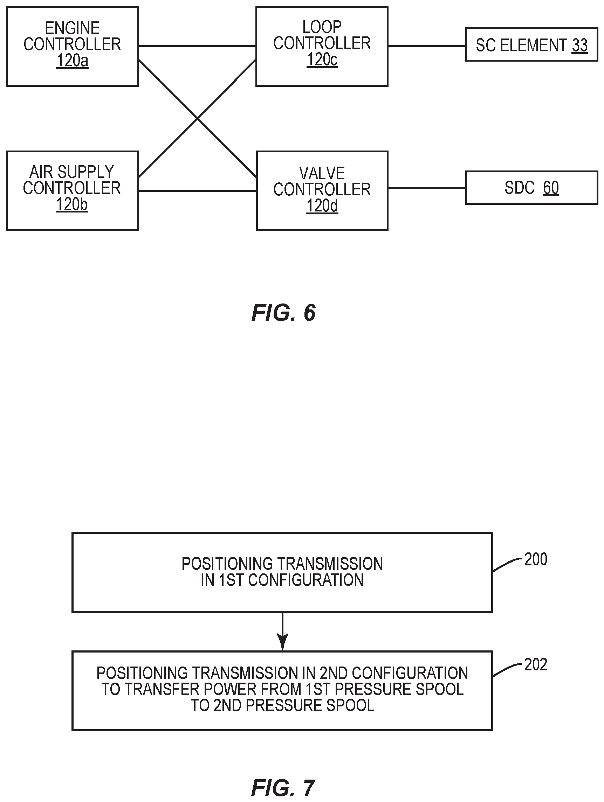

In some examples in which the accessory 60 is a compressor, a single dedicated controller 120 monitors and/or controls the operation of the transmission 30 to control the power transfer and air supply. In other examples, the operation occurs through two or more controllers 120. Figure 6 illustrates a system with various levels of controllers 120. The controllers 120 include a first level of controllers 120 including an engine controller 120a and an air supply controller 120b. A second level of controllers 120 includes a loop controller 120c and a valve controller 120d. In some examples, the higher level controllers function to control general aspects of the air control and power transfer. Lower level controllers function to control more specific aspects. In the example of Figure 6, loop controller 120c controls the speed changing element 33 and valve controller 120d controls the valves 45 and compressor.

In some examples, operation of the transmission 30 to power the accessory 60 includes the air supply controller 120b commanding the desired speed ratios for the speed changing element 33. The air supply controller 120b also controls the valves 45 and accessory 60. In a power transfer configuration, the engine controller 120a controls the speed changing element 33 to command the desired speed ratios.

Figure 7 illustrates a method of operating the transmission 30. The method includes positioning the transmission 30 in a first configuration (block 200). The first configuration provides for transferring power from the turbine engine 20 to the accessory 60.

The method also includes positioning the transmission 30 in a second configuration (block 202). The second configuration transfers power from the first pressure spool 75 of the turbine engine 20 to the second pressure spool 85.

In one specific example of the method shown in Figure 7, the method includes positioning the transmission 30 in the first configuration and transferring power from the turbine engine 20 to the accessory 60 to deliver air to the aircraft system 110. The method also includes positioning the transmission 30 in a second configuration and transferring power from the low pressure spool of the turbine engine 20 to the high pressure spool.

In some examples, when the transmission 30 is configured to transfer power between the first pressure spool 75 and the second pressure spool 85, the accessory 60 is unavailable for use when power is being transferred between the spools 75, 85. However, the ability to transfer power between the spools 75, 85 is generally realized during ground idle and the two functionalities of the power transfer and the accessory 60 do not interfere with each other. In some examples, during power transfer operation, the accessory 60 is still engaged, however the gear ratio is determined by the power transfer operation.

In some examples in which the accessory 60 is a compressor, the air bleed system 40 does not provide air to the aircraft system 110 when the accessory 60 is powered. In other examples, the air bleed system 40 and accessory 60 both concurrently supply air to the aircraft system 110.

In some examples, the engine 20 includes two spools 75, 85 (e.g., a high spool and a low spool). In other examples, the engine 20 includes one or more intermediate pressure spools that provide for power to be transferred from a lower pressure spool to a higher pressure spool (e.g., the intermediate spool to the high pressure spool, or from the low pressure spool to the intermediate spool).

In some examples, the transmission 30 includes a continuously variable transmission that combines efficient air supply benefits of an engine mounted shaft driven accessory 60 with the engine operability benefits of the power transfer. The shaft driven compressor concept utilizes the continuously variable transmission to enable the shaft driven compressor to operate at its required speed while being driven by the second pressure shaft 85. The continuously variable transmission also transfers horsepower from the first pressure spool 75 to the second pressure spool 85. In some examples, the potential benefit of this concept is 2.5% fuel burn improvement, consisting of 1.5% for the efficient air supply and 1% for enabling shaft power transfer.

Further, the current disclosure comprises embodiments according to the following clauses:
Clause 1. A system configured to be operatively connected to a turbine engine of an aircraft and to an accessory of an aircraft, the system configured to selectively transfer power between a first pressure spool of the turbine engine and a second pressure spool of the turbine engine and to power the accessory.
Clause 2. The system of clause 1, wherein the system comprises a transmission with a speed changing element and a clutch.
Clause 3. The system of clause 2, wherein the transmission is configured to selectively operate in one of a first configuration, a second configuration, and a third configuration:
   wherein the first configuration transfers power from the turbine engine to the accessory;
   wherein the second configuration transfers power from the first pressure spool to the second pressure spool; and
   wherein the third configuration prevents the transfer of power from the turbine engine to the accessory and the prevents transfer of the power from the first pressure spool to the second pressure spool.
Clause 4. The system of clause 3, wherein the speed changing element is powered by the second pressure spool in the first configuration.
Clause 5. The system of any one of clauses 1 to 4, further comprising:
   a transmission:
   a first drive mechanism that connects the first pressure spool to the transmission; and
   a second drive mechanism that connects the second pressure spool to the transmission.
Clause 6. The system of any one of clauses 1 to 5, wherein the accessory is a compressor and further comprising a transmission configured to operate at different speeds to cause the compressor to deliver air at a desired pressure to the aircraft system of the aircraft.
Clause 7. The system of any one of clauses 1 to 6, further comprising a controller with processing circuitry configured to drive the accessory and to transfer the power produced from the first pressure spool to the second pressure spool.
Clause 8. The system of clause 7, wherein the controller is integrated within a body of a transmission.
Clause 9. The system of clause 7 or 8, wherein the controller is further configured to operate one or more components of the aircraft system of the aircraft.
Clause 10. The system of any one of clauses 1 to 9, further comprising a transmission is configured to transfer power from the first pressure spool to the second pressure spool and to transfer the power from the second pressure spool to the first pressure spool.
Clause 11. The system of clause 2, wherein the speed changing element is powered by the first pressure spool.
Clause 12. The system of any one of clauses 1 to 11, wherein the accessory is a compressor, the first pressure spool is a low pressure spool, and the second pressure spool is a high pressure spool, wherein the system is configured to selectively transfer power between the low pressure spool and the second pressure spool to deliver air to an aircraft system of the aircraft.
Clause 13. A system configured to be operatively connected to a turbine engine of an aircraft, the system comprising:
   an accessory;
      a transmission;
   a first drive mechanism that connects the transmission to a second pressure spool of the turbine engine;
   a second drive mechanism that connects the transmission to a first pressure spool of the turbine engine;
   wherein the transmission is configured to transfer power of the turbine engine through the first drive mechanism and the second drive mechanism; and
   wherein the transmission is configured to drive the accessory.
Clause 14. The system of clause 13, wherein the transmission is configured to transfer the power from the first pressure spool to the second pressure spool through the first drive mechanism and the second drive mechanism.
Clause 15. The system of clause 13 or 14, wherein the transmission is configured to transfer the power from the second pressure spool to the first pressure spool through the first drive mechanism and the second drive mechanism.
Clause 16. The system of any one of clauses 13 to 15, wherein the transmission comprises a speed changing element operatively connected to and powered by the second pressure spool and a clutch.
Clause 17. The system of clause 16, wherein the speed changing element is a continuously variable transmission.
Clause 18. The system of any one of clauses 13 to 17, wherein the transmission comprises a speed changing element operatively connected to and powered by the first pressure spool.
Clause 19. The system of any one of clauses 13 to 18, further comprising a bleed air system comprising one or more ports and first passageways through which air is delivered from the turbine engine to the aircraft.
Clause 20. The system of clause 19, wherein the accessory is a compressor and the bleed air system further comprises a second passageway that delivers air from the turbine engine to the compressor, the second passageway being separate from the first passageways.
Clause 21. The system of any one of clauses 13 to 20, further comprising a controller configured to selectively operate the transmission in a first mode to transfer the power of the turbine engine through the first drive mechanism and the second drive mechanism and in a second mode to drive the accessory.
Clause 22. The system of clause 21, wherein the controller is further configured to control operation of a bleed air system that delivers air from the turbine engine to the aircraft.
Clause 23. The system of any one of clauses 13 to 22, further comprising a bleed air system configured to supply air from the turbine engine to the accessory.
Clause 24. A method of transferring mechanical power in a turbine engine of an aircraft, the method comprising:
   positioning a transmission in a first configuration and transferring power from the turbine engine to an accessory; and
   positioning the transmission in a second configuration and transferring power from a first pressure spool of the turbine engine to a second pressure spool of the turbine engine.
Clause 25. The method of clause 24, further comprising the accessory being a compressor and transferring power from the turbine engine to the compressor and delivering air from the turbine engine to an aircraft system.
Clause 26. The method of clause 24 or 25, wherein the first pressure spool is a low pressure spool and the second pressure spool is a high pressure spool and positioning the transmission in the second configuration comprises transferring power from the low pressure spool of the turbine engine to the high pressure spool of the turbine engine.
Clause 27. The method of any one of clauses 25 to 26, further comprising providing air to the aircraft system through a bleed air system when the transmission is in the first configuration.
Clause 28. The method of any one of clauses 25 to 27, further comprising preventing power from being transferred from the turbine engine to the accessory in the second configuration.
Clause 29. The method of any one of clauses 25 to 28, wherein the second pressure spool is a high pressure spool and further comprising in the first configuration transferring the power from the high pressure spool of the turbine engine to the accessory.
Clause 30. The method of any one of clauses 26 to 29, further comprising positioning the transmission in a third configuration and transferring power from the high pressure spool to the low pressure spool.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The aspects disclosed herein apply to many different engine architectures, including but not limited to open rotor engines, turboshaft engines, geared turbofan engines, and three-spool engines.

The present disclosure may be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A system (15) configured to be operatively connected to a turbine engine (20) of an aircraft (100) and to an accessory (60) of an aircraft (100), the system (15) configured to selectively transfer power between a first pressure spool (75) of the turbine engine (20) and a second pressure spool (85) of the turbine engine (20) and to power the accessory (60),
wherein the system (15) comprises a transmission (30) with a speed changing element (33) and a clutch (32), and
wherein the transmission (30) is configured to selectively operate in one of a first configuration, a second configuration, and a third configuration:
wherein the first configuration transfers power from the turbine engine (20) to the accessory (60);
wherein the second configuration transfers power from the first pressure spool (75) to the second pressure spool (85); and
wherein the third configuration prevents the transfer of power from the turbine engine (20) to the accessory (60) and the prevents transfer of the power from the first pressure spool (75) to the second pressure spool (85).

2. The system (15) of claim 1, wherein the speed changing element (33) is powered by the first pressure spool (75).

3. The system (15) of claim 1 or 2, wherein the speed changing element (33) is powered by the second pressure spool (85) in the first configuration.

4. The system (15) of any one of claims 1 to 3, further comprising:
a transmission (30):
a first drive mechanism (31) that connects the first pressure spool (75) to the transmission (30); and
a second drive mechanism (30) that connects the second pressure spool (85) to the transmission (30).

5. The system (15) of any one of claims 1 to 4, wherein the accessory (60) is a compressor and further comprising a transmission (30) configured to operate at different speeds to cause the compressor to deliver air at a desired pressure to the aircraft system (110) of the aircraft (100).

6. The system (15) of any one of claims 1 to 5, further comprising a controller (120) with processing circuitry (121) configured to drive the accessory and to transfer the power produced from the first pressure spool (75) to the second pressure spool (85), wherein preferably the controller (120) is integrated within a body of a transmission (30), or wherein preferably the controller (120) is further configured to operate one or more components of the aircraft system (110) of the aircraft (100).

7. The system (15) of any one of claims 1 to 6, further comprising a transmission (30) is configured to transfer power from the first pressure spool (75) to the second pressure spool (85) and to transfer the power from the second pressure spool (85) to the first pressure spool (75).

8. The system (15) of any one of claims 1 to 7, wherein the accessory (60) is a compressor, the first pressure spool (75) is a low pressure spool, and the second pressure spool (85) is a high pressure spool, wherein the system (15) is configured to selectively transfer power between the low pressure spool (75) and the second pressure spool (85) to deliver air to an aircraft system (110) of the aircraft (100).

9. A method of transferring mechanical power in a turbine engine of an aircraft (100), wherein a system (15) comprises a transmission (30) with a speed changing element (33) and a clutch (32), the method comprising:
positioning the transmission (30) in a first configuration and transferring power from the turbine engine (20) to an accessory (60); and
positioning the transmission (30) in a second configuration and transferring power from a first pressure spool (75) of the turbine engine (20) to a second pressure spool (85) of the turbine engine (20), wherein the transmission (30) is configured to selectively operate in one of a first configuration, a second configuration, and a third configuration:
wherein the first configuration transfers power from the turbine engine (20) to the accessory (60);
wherein the second configuration transfers power from the first pressure spool (75) to the second pressure spool (85); and
wherein the third configuration prevents the transfer of power from the turbine engine (20) to the accessory (60) and the prevents transfer of the power from the first pressure spool (75) to the second pressure spool (85).

10. The method of claim 9, further comprising the accessory (60) being a compressor and transferring power from the turbine engine (20) to the compressor and delivering air from the turbine engine (20) to an aircraft system (110).

11. The method of claim 9 or 10, wherein the first pressure spool (75) is a low pressure spool and the second pressure spool (85) is a high pressure spool and positioning the transmission (30) in the second configuration comprises transferring power from the low pressure spool (75) of the turbine engine (20) to the high pressure spool (85) of the turbine engine (20).

12. The method of claim 10, further comprising providing air to the aircraft system (110) through a bleed air system (40) when the transmission (30) is in the first configuration.

13. The method of claim 10, further comprising preventing power from being transferred from the turbine engine (20) to the accessory (60) in the second configuration.

14. The method of claim 10, wherein the second pressure spool (85) is a high pressure spool and further comprising in the first configuration transferring the power from the high pressure spool (85) of the turbine engine (20) to the accessory (60).

15. The method of claim 11, further comprising positioning the transmission (30) in a third configuration and transferring power from the high pressure spool (85) to the low pressure spool (75).
